# EUROPÄISCHE PATENTSCHRIFT

(11) **EP 4 111 676 B1**
(45) Veröffentlichungstag und Bekanntmachung des Hinweises auf die Patenterteilung: **04.12.2024**
(21) Anmeldenummer: 21743130.3
(22) Anmeldetag: 08.07.2021
(51) Int. Cl.: H04N 1/04, H04N 1/203, H04N 1/195

(54) **VORRICHTUNG UND VERFAHREN ZUR OPTISCHEN ERFASSUNG EINES DOKUMENTS**
DEVICE AND METHOD FOR OPTICALLY CAPTURING A DOCUMENT
DISPOSITIF ET PROCÉDÉ DE CAPTURE OPTIQUE D'UN DOCUMENT

(30) Priorität: 14.07.2020 DE 102020118484
(43) Veröffentlichungstag der Anmeldung: 04.01.2023
(73) Patentinhaber: Bundesdruckerei GmbH, 10969 Berlin (DE)
(72) Erfinder: RABELER, Uwe, 30453 Hannover (DE); WOLF, Andreas, 13158 Berlin (DE)
(74) Vertreter: Glawe, Delfs, Moll
(86) Internationale Anmeldenummer: PCT/EP2021/068950
(87) Internationale Veröffentlichungsnummer: WO 2022/013050

(56) Entgegenhaltungen:
- DE-T2- 69 729 765
- US-A1- 2002 191 994
- US-A1- 2014 002 723

## Beschreibung

### Technisches Gebiet

Die vorliegende Erfindung betrifft eine Vorrichtung sowie ein Verfahren zur optischen Erfassung eines Dokuments.

### Beschreibung des Standes der Technik

Aus dem Stand der Technik sind Dokumentenlesegeräte zum Erfassen von Datenseiten von Identifikationsdokumenten, insbesondere Reisepässen, bekannt. Derartige Lesegeräte kommen bspw. bei der Einreise an Flughäfen im Zusammenhang mit der automatisierten Passprüfung (elektronische Grenzkontrolle) zum Einsatz.

Einerseits sind Systeme bekannt, bei denen der zu prüfende Pass auf einem Schlitten (Tray) an einer optischen Erfassungseinrichtung wie einer oder mehrerer Scannerzeilen oder einer Kamera vorbei bewegt wird (vgl. bspw. DE 10 2012 211 076 A1 und DE 10 2012 215 845 A1). Darüber hinaus sind auch Systeme bekannt, bei denen das zu prüfende Dokument auf eine nicht bewegliche Dokumentenauflage aufgelegt und dort von der gegenüberliegenden Seite beleuchtet wird. Von dem aufgelegten Dokument reflektiertes Licht wird dann in einer geeigneten Erfassungseinrichtung, wie einer Kamera, erfasst (vgl. bspw. DE 10 2017 124 572 A1). Aus der EP 2 323 368 A1 ist ein Lesegerät der letztgenannten Gattung bekannt, bei dem unterhalb der Dokumentenauflage ein Spiegel angeordnet ist, der von dem aufgelegten Dokument reflektiertes Licht in eine zur Erfassung des Dokuments vorgesehene Kamera umlenkt.

Die US 2002/0191994 A1 offenbart ein Scangerät zum Einscannen von zwei aufeinanderfolgenden Seiten eines aufgeschlagenen Buches. Die Scan-Auflagefläche umfasst zwei winklig zueinander angeordnete Erfassungsabschnitte aus Glasscheiben sowie einen unterhalb der Auflagefläche angeordneten Scan-Schlitten, der sich senkrecht zu dem Übergang der beiden Erfassungsabschnitte im wesentlichen über die gesamte Breite der Scan-Auflagefläche erstreckt und parallel zu dieser hin- und herbewegbar ist. Jedem Erfassungsabschnitt ist auf dem Scan-Schlitten eine Erfassungseinrichtung aus Linse und Bildsensor zugeordnet. Eine Anordnung von Reflexionsspiegeln bzw. reflektiert die auf die Erfassungsabschnitte aufgelegten Buchseiten auf die Bildsensoren, wodurch ein simultanes Scannen zweier Seiten eines Buches ermöglicht wird.

### Zusammenfassung der Erfindung

Ausgehend hiervon werden erfindungsgemäß eine Vorrichtung zur optischen Erfassung eines Dokuments mit den Merkmalen des Anspruchs 1 und ein Verfahren zur optischen Erfassung eines Dokuments mit den Merkmalen des Anspruchs **4** vorgeschlagen.

Die Erkenntnis der Erfindung liegt darin begründet, eine Dokumentenauflage einer Vorrichtung zur optischen Erfassung eines Dokuments mit einem ersten Erfassungsabschnitt und einem zweiten Erfassungsabschnitt auszubilden. Dabei ist der erste Erfassungsabschnitt einem ersten Dokumentenabschnitt eines aufgelegten Dokuments zugeordnet, und der zweite Erfassungsabschnitt ist einem zweiten Dokumentenabschnitt des aufgelegten Dokuments zugeordnet.

Damit eröffnet sich erfindungsgemäß die Möglichkeit, ein Dokument mit zwei Dokumentenabschnitten, so insbesondere einen aufgeklappten zweiseitigen Reisepass, vollständig in einem Erfassungsschritt zu erfassen. Damit wird eine wesentliche Fehlerquelle bei elektronischen Grenzkontrollsystemen, die lediglich eine Passseite erfassen, unterbunden, nämlich das Auflegen der "falschen" Passseite. Im Unterschied zu Systemen, die nacheinander (sukzessives Auflegen der beiden Dokumentenabschnitte bzw. bewegliches Einlesen mittels Scannen oder einem über einer Kamera beweglichen Schlitten) die beiden Seiten erfassen, benötigt die vorgeschlagene Erfindung nicht oder zumindest nicht wesentlich mehr Zeit als bekannte Einseitenleser.

Erfindungsgemäß ist eine optische Erfassungsanordnung mit zwei Erfassungseinrichtungen (wie insb. Kameras) vorgesehen. Die erste Erfassungseinrichtung ist dem ersten Erfassungsabschnitt zugeordnet, und die zweite Erfassungseinrichtung ist dem zweiten Erfassungsabschnitt zugeordnet.

Um den Strahlengang ausreichend kurz (und die Bauweise der erfindungsgemäßen Vorrichtung gewünscht kompakt) zu halten, kann eine Faltung des Strahlengangs vorgesehen sein. Dabei kann ein erster Umlenkspiegel zum Umlenken des von dem ersten Erfassungsabschnitt kommenden Lichts zu der ersten Erfassungseinrichtung vorgesehen sein, und es kann ein zweiter Umlenkspiegel zum Umlenken des von dem zweiten Erfassungsabschnitt kommenden Lichts zu der zweiten Erfassungseinrichtung vorgesehen sein. Einer oder beide Umlenkspiegel können zur weiteren Platzersparnis teiltransparent ausgebildet sein, so dass ein Ineinanderverschachteln der beiden Strahlengänge möglich ist.

Des weiteren können einer oder beide Erfassungsabschnitte schaltbar transparent ausgebildet sein. Dabei kann es sich um eine an sich bekannte Vorgehensweise handeln, bei der Glas mit einer mit elektrischem Strom beaufschlagbaren Flüssigkristallschicht beschichtet wird. Je nach Schaltzustand ist diese Flüssigkristallschicht transparent oder intransparent. Alternativ sind andere SchaltMöglichkeiten denkbar, wie bspw. eine mechanische Jalousienlösung. Die Schaltung der Transparenz des oder der Erfassungsabschnitte eröffnet die Möglichkeit, zum Erfassen eines Dokumentenabschnitts den ihm zugeordneten und sonst intransparenten Erfassungsabschnitt transparent zu schalten, während der entsprechend andere Erfassungsabschnitt intransparent bleibt. Damit wird eventuell einfallendes und störendes Fremdlicht vermieden. Um beide Dokumentenabschnitte zu erfassen, werden die beiden Erfassungsabschnitte direkt nacheinander transparent/intransparent geschaltet, was insb. bei der Verwendung von LCD-Lösungen in Sekundenbruchteilen erfolgen kann, so dass eine Erfassung von zwei Reisepassseiten nur unwesentlich länger dauert, als die Erfassung nur einer Seite.

Die vorliegende Beschreibung deckt auch ein Computerprogramm mit Programmcode ab, der dazu geeignet ist, ein erfindungsgemäßes Verfahren auszuführen, wenn das Computerprogramm auf einem Prozessor bzw. einer geeigneten Rechnereinrichtung/Steuereinrichtung abläuft. Es werden sowohl das Computerprogramm selbst als auch abgespeichert auf einem computerlesbaren Medium (Computerprogrammprodukt) beansprucht.

Weitere Vorteile und Ausgestaltungen der Erfindung ergeben sich aus den Unteransprüchen, der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, wie sie in den Ansprüchen definiert ist, zu verlassen.

Die Erfindung ist anhand eines Ausführungsbeispiels in den Zeichnungen stark schematisch dargestellt und wird im folgenden unter Bezugnahme auf die Zeichnungen ausführlich beschrieben.

### Kurzbeschreibung der Zeichnungen

Figur 1 zeigt eine erfindungsgemäße Vorrichtung zur optischen Erfassung eines Dokuments in seitlicher Ansicht.
Figur 2 zeigt die Vorrichtung zur optischen Erfassung eines Dokuments mit aufgelegtem Dokument im Betrieb.
Figur 3 zeigt eine stark schematische Blockdarstellung einer erfindungsgemäßen Vorrichtung mit Steuereinrichtung.
Figur 4 zeigt ein Blockdiagramm zur Veranschaulichung eines erfindungsgemäßen Verfahrensablaufes.

### Ausführliche Beschreibung

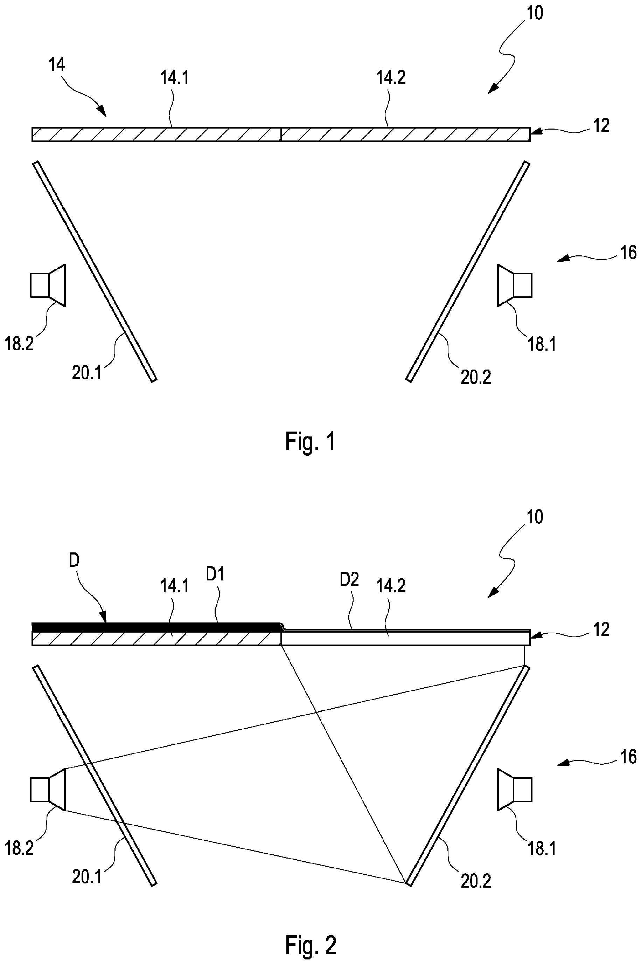

Figur 1 zeigt eine erfindungsgemäße Vorrichtung 10 zur optischen Erfassung eines Dokuments in seitlicher Ansicht. Die Vorrichtung 10 umfasst eine Dokumentenauflage 12 mit einer Oberfläche 14, die zum Auflegen eines Dokuments D ausgebildet ist (vgl. Figur 2). Bei dem aufzulegenden und zu erfassenden Dokument D handelt es sich bspw. um einen Reisepass, der in aufgeklapptem (d.h. aufgeschlagenem) Zustand die doppelte Größe eines sogenannten ID-3-Dokuments hat (125 mm × 88 mm gemäß ISO/IEC 7810). Dies bedeutet, dass die Oberfläche 14 der Dokumentenauflage 12 eine doppelte ID-3-Größe (125 mm × 176 mm) aufweist (und somit als Ganzseiten-Passleser ausgebildet ist).

Die Vorrichtung 10 umfasst des weiteren eine optische Erfassungsanordnung 16 zur Detektion von Licht, das von dem aufgelegten Dokument die reflektiert wird. Zur Beleuchtung des auf die Dokumentenauflage 12 aufgelegten Dokuments D ist eine (in den Figuren 1 und 2 nicht dargestellte) Beleuchtungsanordnung vorgesehen. Eine geeignete Beleuchtung ist bspw. aus der DE 10 2014 205 363 A1 bekannt.

Erfindungsgemäß umfasst die Dokumentenauflage 12 einen ersten Erfassungsabschnitt 14.1 und einen zweiten Erfassungsabschnitt 14.2 umfasst, die derart ausgebildet sind, dass der erste Erfassungsabschnitt 14.1 einem ersten Dokumentenabschnitt D1 eines auf die Oberfläche 14 aufgelegten Dokuments D zugeordnet ist und der zweite Erfassungsabschnitt 14.2 einem zweiten Dokumentenabschnitt D2 des aufgelegten Dokuments D zugeordnet ist. Handelt es sich bei dem zu erfassenden Dokument D um einen Reisepass, so entspräche der erste Dokumentenabschnitt D1 eine erste Seite des aufgeklappten Reisepasses und der zweite Dokumentenabschnitt D2 die gegenüberliegende Seite des aufgeklappten Reisepasses. Jeder Erfassungsabschnitt 14.1, 14.2 hat dann ID-3-Größe.

Die optische Erfassungsanordnung 16 umfasst erfindungsgemäß zwei Erfassungseinrichtungen 18.1, 18.2, wobei eine erste Erfassungseinrichtung 18.1 dem ersten Erfassungsabschnitt 14.1 zugeordnet ist und eine zweite Erfassungseinrichtung 18.2 dem zweiten Erfassungsabschnitt 14.2 zugeordnet ist. Bei den Erfassungseinrichtungen kann es sich um geeignete Bilderfassungsvorrichtungen wie bspw. um geeignete (Digital-)Kameras, optische Sensoren (CMOS, CCD) o.dgl. handeln. In den Figuren sind die Erfassungseinrichtungen stark schematisch als Kameras dargestellt.

Zum Erzielen einer kompakten Bauweise kann der Strahlengang des von der Dokumentenauflage reflektierten Lichts gefaltet sein. Hierfür sind Umlenkspiegel 20 vorgesehen, wie dargestellt ein erster Umlenkspiegel 20.1, der von dem ersten Erfassungsabschnitt 14.1 reflektiertes Licht in die erste Erfassungseinrichtung 18.1 umlenkt, und ein zweiter Umlenkspiegel 20.2, der von dem zweiten Erfassungsabschnitt 14.2 reflektiertes Licht in die zweite Erfassungseinrichtung 18.2 umlenkt.

Zum Erzielen einer besonders kompakten Bauweise können die beiden Umlenkspiegel 20.1, 20.2 im Strahlengang des jeweils anderen Umlenkspiegels angeordnet sein, wie dies aus der Darstellung der Figuren ersichtlich ist. So zeigt Figur 2 wie von dem zweiten Erfassungsabschnitt 14.2 reflektiertes Licht auf den zweiten Umlenkspiegel 20.2 fällt und von diesem in Richtung der zweiten Erfassungseinrichtung 18.2 umgelenkt wird, wobei sich der erste Umlenkspiegel 20.1 in dem umgelenkten Strahlengang befindet. Zu diesem Zwecke können die beiden Umlenkspiegel als teiltransparente Teilerspiegel ausgebildet sein, wofür im Gegenzug die Lichtmenge zur Beleuchtung des aufgelegten Dokuments entsprechend erhöht werden muss, um den Lichtverlust an dem im Strahlengang befindlichen Teilerspiegel zu kompensieren.

Weiter erfindungsgemäß kann vorgesehen sein, den ersten und/oder den zweiten Erfassungsabschnitt 14.1, 14.2 schaltbar transparent auszubilden. Wie eingangs beschrieben, kann diese Schaltbarkeit elektrisch/elektrochemisch oder auch mechanisch gestaltet sein. Die Dokumentenauflage wird dann in dem Moment der Erfassung des auf ihr liegenden Objektes in dem maßgeblichen Erfassungsabschnitt transparent geschaltet. Diese Maßnahme trägt dazu bei, eventuell einfallendes und störendes Fremdlicht zu vermeiden.

Figur 1 zeigt mittels der angebrachten Schraffuren beide Erfassungsabschnitte 14.1, 14.2 in intransparentem Zustand. Figur 2 zeigt die erfindungsgemäße Vorrichtung 10 mit aufgelegtem aufgeklapptem Reisepass D, wobei eine erste Passseite D1 auf dem ersten Erfassungsabschnitt 14.1 und eine zweite Passseite D2 auf dem zweiten Erfassungsabschnitt 14.2 aufliegt. Die Momentaufnahme der Figur 2 zeigt, wie der zweite Erfassungsabschnitt 14.2 transparent geschaltet ist (Darstellung ohne Schraffuren) und deutet den Strahlengang des von der aufgelegten zweiten Passseite D2 reflektierten Lichts zu dem zweiten Umlenkspiegel 20.2 und von diesem durch den teiltransparenten ersten Umlenkspiegel 20.1 hindurch zu der zweiten Kamera 18.2 an.

Im Betrieb wird somit ein Dokument D mit einem ersten Dokumentenabschnitt D1 und einem zweiten Dokumentenabschnitt D2 auf die Oberfläche 14 der Dokumentenauflage 12 der erfindungsgemäßen Vorrichtung 10 aufgelegt, ohne dass eine Ausrichtung bzw. Orientierung der beiden Dokumentenabschnitte zu beachten wäre.

Nach dem erfolgten Auflegen des Dokuments D werden die beiden Dokumentenabschnitte D1, D2 von der gegenüberliegenden Seite der Dokumentenauflage 12 in an sich bekannter Art und Weise beleuchtet, wobei zunächst kein Licht auf die beiden Dokumentenabschnitte D1, D2 fällt, da die zugeordneten Erfassungsabschnitte 14.1, 14.2 intransparent geschaltet sind (vgl. Figur 1).

Zum Erfassen des Dokuments D werden dann nacheinander die den beiden Erfassungsabschnitten 14.1,14.2 jeweils zugeordneten Erfassungseinrichtungen ausgelöst. Vor der jeweiligen Auslösung wird der entsprechende Erfassungsabschnitt 14.1, 14.2 transparent und anschließend wieder intransparent geschaltet.

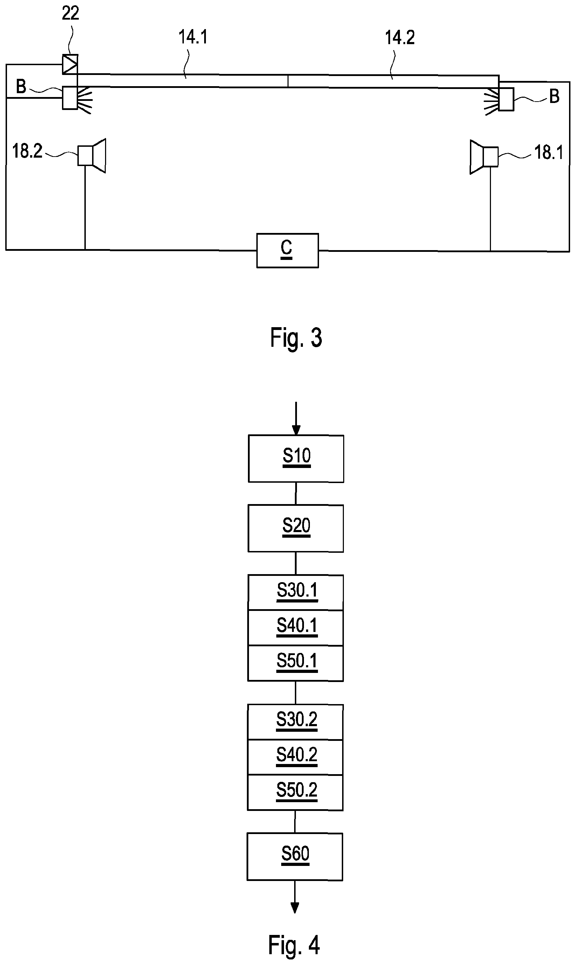

Die Steuerung kann mittels einer Steuereinrichtung C erfolgen, die bspw. wie in Figur 3 schematisch dargestellt verschaltet sein kann.

Demnach ist die Steuereinrichtung C jeweils mit den Erfassungsabschnitten 14.1 und 14.2 sowie den entsprechend zugeordneten Erfassungseinrichtungen 18.1 und 18.2 verbunden. Gleichfalls ist die Steuereinrichtung C mit einer Beleuchtungsanordnung B verbunden, die bspw. (wie in Figur 3 angedeutet) als die Dokumentenauflage 12 umgebender Rahmen ausgestaltet sein kann. Alternative Arten der Beleuchtung sind dem Fachmann geläufig. Zudem kann die Steuereinrichtung C mit einem Sensor 22 verbunden sein, der dazu ausgebildet ist, festzustellen, ob auf ein zu erfassender Gegenstand auf die Dokumentenauflage 12 aufgelegt wurde.

Erfindungsgemäß können folgende Schritte zum Betrieb der Steuereinrichtung C vorgesehen sein. Zunächst stellt der Sensor 22 fest, ob ein zu erfassender Gegenstand auf die Dokumentenauflage 12 aufgelegt wurde (Schritt S10) und sendet ein entsprechendes Signal an die Steuereinrichtung C. In einem Schritt S20, bspw. in Reaktion auf das in Schritt S10 übermittelte Signal, veranlasst die Steuereinrichtung C ein Beleuchten der Erfassungsabschnitte 14.1, 14.2 der Dokumentenauflage 12 durch die Beleuchtungsanordnung B.

In einem Schritt S30.1 steuert die Steuereinrichtung C den ersten Erfassungsabschnitt 14.1 an, um ihn transparent zu schalten, und löst gleichzeitig bzw. zeitlich leicht versetzt die erste Erfassungseinrichtung 18.1 an, um ein Bild des auf dem ersten Erfassungsabschnitt 14.1 aufliegenden ersten Dokumentenabschnitts D1 anzufertigen (Schritt S40.1). Im Anschluss daran wird in einem Schritt S50.1 der erste Erfassungsabschnitt 14.1 wieder intransparent geschaltet.

Daraufhin steuert in analoger Weise in einem Schritt S30.2 die Steuereinrichtung C den zweiten Erfassungsabschnitt 14.2 an, um ihn transparent zu schalten, und löst gleichzeitig bzw. zeitlich leicht versetzt die zweite Erfassungseinrichtung 18.2 an, um ein Bild des auf dem zweiten Erfassungsabschnitt 14.2 aufliegenden zweiten Dokumentenabschnitts D2 anzufertigen (Schritt S40.2). Im Anschluss daran wird in einem Schritt S50.2 der zweite Erfassungsabschnitt 14.2 wieder intransparent geschaltet.

Schließlich liegt von jeder der Kameras 18.1 und 18.2 jeweils eine Aufnahme vor, und es kann in einem Prozessor (der bspw. Bestandteil der Steuereinrichtung sein kann) berechnet werden, welche der beiden Aufnahmen eine Erfassung der "richtigen" Passseite darstellt, um diese in an sich bekannter Art und Weise der Weiterverwertung im Rahmen der elektronischen Grenzkontrolle zuzuführen (Schritt S60: Identifizieren des weiterzuverarbeitenden Dokumentenabschnitts).

Bei der Erfindung handelt es sich somit um einen Ganzseiten-Passleser, der ein Auslesen eines aufgeklappten Reisepasses ohne Zwang einer "korrekten" Ausrichtung/Orientierung der Passseiten ermöglicht. Die Idee der Erfindung besteht darin, dass optische System zur Erfassung einer Passseite zu verdoppeln und zur Erfassung jeder der beiden nebeneinanderliegenden Passseiten jeweils eine Kamera und einen (Umlenk-)Spiegel vorzusehen.

### Bezugszeichenliste

- 10: Vorrichtung zur optischen Erfassung eines Dokuments
- 12: Dokumentenauflage
- 14: Oberfläche
- 14.1: erster Erfassungsabschnitt
- 14.2: zweiter Erfassungsabschnitt
- 16: optische Erfassungsanordnung
- 18.1: erste Erfassungseinrichtung
- 18.2: zweite Erfassungseinrichtung
- 20.1: erster Umlenkspiegel
- 20.2: zweiter Umlenkspiegel
- 22: Sensor

- B: Beleuchtungselement
- C: Steuereinrichtung
- D: Dokument
- D1: erster Dokumentenabschnitt
- D2: zweiter Dokumentenabschnitt

- S10: Erkennen des aufgelegten Passes
- S20: Beleuchten
- S30: Transparentschalten
- S40: Auslösen
- S50: Intransparentschalten
- S60: Identifizieren

## Patentansprüche

1. Vorrichtung (10) zur optischen Erfassung eines Dokuments (D), mit
einer Dokumentenauflage (12) mit einer Oberfläche (14) zum Auflegen eines Dokuments (D), wobei die Dokumentenauflage (12) einen ersten Erfassungsabschnitt (14.1) und einen zweiten Erfassungsabschnitt (14.2) umfasst, die derart ausgebildet sind, dass der erste Erfassungsabschnitt (14.1) einem ersten Dokumentenabschnitt (D1) eines auf die Oberfläche (14) aufgelegten Dokuments (D) zugeordnet ist und der zweite Erfassungsabschnitt (14.2) einem zweiten Dokumentenabschnitt (D2) des aufgelegten Dokuments (D) zugeordnet ist,
mindestens einem Beleuchtungselement (B) zum Beleuchten der Oberfläche (14), und
einer optischen Erfassungsanordnung (16) zur Detektion von Licht, das von dem aufgelegten Dokument (D) reflektiert wird, wobei die Erfassungsanordnung (16) eine dem ersten Erfassungsabschnitt (14.1) zugeordnete erste Erfassungseinrichtung (18.1) und eine dem zweiten Erfassungsabschnitt (14.2) zugeordnete zweite Erfassungseinrichtung (18.2) umfasst,
wobei der erste Erfassungsabschnitt (14.1) und der zweite Erfassungsabschnitt (14.2) schaltbar transparent ausgebildet sind und eine Steuereinrichtung (C) vorgesehen ist, die derart ausgebildet ist, dass eine sukzessive Transparentschaltung des ersten Erfassungsabschnitts (14.1) und des zweiten Erfassungsabschnitts (14.2) erfolgt.

2. Vorrichtung (10) nach Anspruch 1, bei der ein erster Umlenkspiegel (20.1) zum Umlenken von Licht von dem ersten Erfassungsabschnitt (14.1) zu der ersten Erfassungseinrichtung (18.1) vorgesehen ist und ein zweiter Umlenkspiegel (20.2) zum Umlenken von Licht von dem zweiten Erfassungsabschnitt (14.2) zu der zweiten Erfassungseinrichtung (18.2) vorgesehen ist.

3. Vorrichtung (10) nach Anspruch 2, bei der der erste und/oder der zweite Umlenkspiegel (20.1, 20.2) teiltransparent ausgebildet sind.

4. Verfahren zur optischen Erfassung eines Dokuments (D), das mit einem ersten Dokumentenabschnitt (D1) und einem zweiten Dokumentenabschnitt (D2) derart auf eine Dokumentenauflage (12) aufgelegt ist, dass der erste Dokumentenabschnitt (D1) auf einem ersten Erfassungsabschnitt (14.1) der Dokumentenauflage (12) aufliegt und der zweite Dokumentenabschnitt (D2) auf einem zweiten Erfassungsabschnitt (14.2) der Dokumentenauflage (12) aufliegt, mit den Schritten:
- Beleuchten (S20) der Dokumentenabschnitte (D1, D2) des aufgelegten Dokuments (D),
- Auslösen (S40.1) einer dem ersten Erfassungsabschnitt (14.1) zugeordneten ersten Erfassungseinrichtung (18.1) zum Erfassen des ersten Dokumentenabschnitts (D1),
- Auslösen (S40.2) einer dem zweiten Erfassungsabschnitt (14.2) zugeordneten zweiten Erfassungseinrichtung (18.2) zum Erfassen des zweiten Dokumentenabschnitts (D2),
wobei der erste und der zweite Erfassungsabschnitt (14.1, 14.2) schaltbar transparent ausgebildet sind und vor bzw. während dem Schritt des Auslösens (S40.1) der dem ersten Erfassungsabschnitt (14.1) zugeordneten ersten Erfassungseinrichtung (18.1) der erste Erfassungsabschnitt (14.1) transparent geschaltet wird (S30.1), und vor bzw. während dem Schritt des Auslösens (S40.2) der dem zweiten Erfassungsabschnitt (14.2) zugeordneten zweiten Erfassungseinrichtung (18.2) der zweite Erfassungsabschnitt (14.2) transparent geschaltet wird (S30.2).

5. Verfahren nach Anspruch 4, mit dem weiteren Schritt (S60) des Identifizierens des weiterzuverarbeitenden Dokumentenabschnitts (D1, D2).

6. Computerprogramm mit Programmcodemitteln, um alle Schritte eines Verfahrens nach einem der Ansprüche 4 bis 5 durchzuführen, wenn das Computerprogramm auf einer geeigneten Rechnereinrichtung bzw. Steuereinrichtung (C) ausgeführt wird.

## Claims

1. Apparatus (10) for optically capturing a document (D), comprising
a document support (12) with a surface (14) for placing a document (D) thereon, wherein the document support (12) comprises a first capture section (14.1) and a second capture section (14.2), which are designed such that the first capture section (14.1) is assigned to a first document section (D1) of a document (D) which is placed on the surface (14) and the second capture section (14.2) is assigned to a second document section (D2) of the placed document (D),
at least one illumination element (B) for illuminating the surface (14), and
an optical capture arrangement (16) for detecting light which is reflected by the placed document (D), wherein the capture arrangement (16) comprises a first capture device (18.1), which is assigned to the first capture section (14.1), and a second capture device (18.2), which is assigned to the second capture section (14.2),
wherein the first capture section (14.1) and the second capture section (14.2) are designed to be switchably transparent, and a control device (C) which is designed such that successive transparency switching of the first capture section (14.1) and the second capture section (14.2) takes place is provided.

2. Apparatus (10) according to Claim 1, wherein a first deflection mirror (20.1) for deflecting light from the first capture section (14.1) to the first capture device (18.1) is provided and a second deflection mirror (20.2) for deflecting light from the second capture section (14.2) to the second capture device (18.2) is provided.

3. Apparatus (10) according to Claim 2, wherein the first and/or the second deflection mirrors (20.1, 20.2) are partially transparent.

4. Method for optically capturing a document (D), which has been placed with a first document section (D1) and a second document section (D2) on a document support (12) in a manner such that the first document section (D1) lies on a first capture section (14.1) of the document support (12) and the second document section (D2) lies on a second capture section (14.2) of the document support (12), comprising the steps of:
- illuminating (S20) the document sections (D1, D2) of the placed document (D),
- triggering (S40.1) a first capture device (18.1), which is assigned to the first capture section (14.1), to capture the first document section (D1),
- triggering (S40.2) a second capture device (18.2), which is assigned to the second capture section (14.2), to capture the second document section (D2),
wherein the first and the second capture sections (14.1, 14.2) are designed to be switchably transparent, and before or during the step of triggering (S40.1) the first capture device (18.1), which is assigned to the first capture section (14.1), the first capture section (14.1) is switched to transparent (S30.1), and before or during the step of triggering (S40.2) the second capture device (18.2), which is assigned to the second capture section (14.2), the second capture section (14.2) is switched to transparent (S30.2).

5. Method according to Claim 4, comprising the further step (S60) of identifying the document section (D1, D2) to be processed further.

6. Computer program having program code means to carry out all the steps of a method according to any of Claims 4 to 5 when the computer program is executed on a suitable computer device or control device (C).

## Revendications

1. Dispositif (10) de détection optique d'un document (D), comprenant
une zone de dépose de document (12) avec une surface (14) destinée à déposer un document (D), la zone de dépose de document (12) comprenant une première section de détection (14.1) et une seconde zone de détection (14.2) qui sont réalisées de telle sorte que la première section de détection (14.1) est associée à une première section de document (D1) d'un document (D) déposé sur la surface (14) et la seconde zone de détection (14.2) est associée à une seconde section de document (D2) du document (D) déposé,
au moins un élément d'éclairage (B) destiné à éclairer la surface (14), et un agencement de détection optique (16) destiné à détecter une lumière qui est réfléchie depuis le document (D) déposé, l'agencement de détection (16) comprenant un premier système de détection (18.1) associé à la première section de détection (14.1) et un second système de détection (18.2) associé à la seconde section de détection (14.2),
dans lequel la première section de détection (14.1) et la seconde section de détection (14.2) sont réalisées de manière commutable en transparence et il est prévu un système de commande (C) qui est réalisé de telle sorte qu'il se produit une commutation en transparence successive de la première section de détection (14.1) et de la seconde section de détection (14.2).

2. Dispositif (10) selon la revendication 1, dans lequel il est prévu un premier miroir de renvoi (20.1) destiné à renvoyer une lumière depuis la première section de détection (14.1) jusqu'au premier système de détection (18.1) et il est prévu un second miroir de renvoi (20.2) pour renvoyer une lumière depuis la seconde section de détection (14.2) jusqu'au second système de détection.

3. Dispositif (10) selon la revendication 2, dans lequel le premier et/ou le second miroir de renvoi (20.1, 20.2) sont réalisés de manière en partie transparente.

4. Procédé de détection optique d'un document (D) qui est déposé avec une première section de document (D1) et une seconde section de document (D2) sur une zone de dépose de document (12) de telle sorte que la première section de document (D1) repose sur une première section de détection (14.1) de la zone de dépose de document (12) et la seconde section de document (D2) repose sur une seconde zone de détection (14.2) de la zone de dépose de document (12), comprenant les étapes consistant à :
- éclairer (S20) les sections de document (D1, D2) du document (D) déposé,
- déclencher (S40.1) un premier système de détection (18.1) associé à la première section de détection (14.1) pour détecter la première section de document (D1),
- déclencher (S40.2) un second système de détection (18.2) associé à la seconde section de détection (14.2) pour détecter la seconde section de document (D2),
dans lequel la première et la seconde section de détection (14.1, 14.2) sont réalisées de manière commutable en transparence et, avant ou pendant l'étape de déclenchement (S40.1) du premier système de détection (18.1) associé à la première section de détection (14.1), la première section de détection (14.1) est commutée en transparence (S30.1), et avant ou pendant l'étape de déclenchement (S40.2) du second système de détection (18.2) associé à la seconde section de détection (14.2), la seconde section de détection (14.2) est commutée en transparence (S30.2).

5. Procédé selon la revendication 4, comprenant en outre l'étape (S60) consistant à identifier la section (D1, D2) devant être traitée ultérieurement.

6. Programme d'ordinateur comprenant des moyens de codage de programme permettant d'effectuer toutes les étapes d'un procédé selon l'une quelconque des revendications 4 à 5, quand le programme d'ordinateur est exécuté sur un système de calcul ou un système de commande (C) approprié.
